(19) Europäisches Patentamt
European Patent Office
Office européen des brevets

(11) **EP 4 764 852 A1**

(12) **EUROPEAN PATENT APPLICATION**

(43) Date of publication:
24.06.2026 Bulletin 2026/26

(21) Application number: 25193216.6

(22) Date of filing: 31.07.2025

(51) International Patent Classification (IPC):
**G06F 9/48** (2006.01) **G06F 9/455** (2018.01)
**G06F 9/50** (2006.01)

(52) Cooperative Patent Classification (CPC):
**G06F 9/5077; G06F 9/45558; G06F 9/4856;**
G06F 2009/4557

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.12.2024 CN 202411911576

(71) Applicants:
• Beijing Volcano Engine Technology Co., Ltd.
Beijing 100190 (CN)
• Lemon Inc.
Grand Cayman, KY1-1205 (KY)

(72) Inventors:
• JIANG, Fuxin
Beijing 100028 (CN)
• CHEN, Zuzhi
Beijing 100028 (CN)
• ZHANG, Tieying
Los Angeles CA 90066 (US)
• XU, Liangzhuo
Beijing 100028 (CN)
• LI, Zhaoyunfei
Beijing 100028 (CN)

(74) Representative: Marks & Clerk LLP
15 Fetter Lane
London EC4A 1BW (GB)

(54) **VIRTUAL MACHINE ORCHESTRATION SCHEDULING METHOD, ELECTRONIC DEVICE AND STORAGE MEDIUM**

(57) A virtual machine orchestration scheduling method, an electronic device, and a storage medium are provided. The method includes: in response to a virtual machine secondary scheduling request, creating a first virtual machine planning model according to a deployment attribute feature of an initial virtual machine deployed on a physical machine, and determining a first deployment plan that minimizes a total scheduling cost; determining an initial virtual machine to be migrated out in each type of initial virtual machine in each physical machine; creating a second virtual machine planning model for a target initial virtual machine to be migrated out with an anti-affinity constraint in the initial virtual machine to be migrated out, and determining a second deployment plan that minimizes a scheduling cost of the target initial virtual machine to be migrated out; and performing virtual machine scheduling according to the first deployment plan and the second deployment plan.

In response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, where the first deployment plan includes a predicted deployment number of each type of initial virtual machine in each physical machine without considering a virtual machine anti-affinity constraint — S201

Determining, according to an initial deployment situation of each type of initial virtual machine in each physical machine and the first deployment plan, an initial virtual machine to be migrated out in each type of initial virtual machine in each physical machine — S202

Determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered — S203

Performing virtual machine scheduling according to the first deployment plan and the second deployment plan — S204

Fig. 2

EP 4 764 852 A1

**Description**

CROSS-REFERENCE TO RELATED APPLICATION

This application claims the priority to the Chinese Patent Application, No. 202411911576.3, which was filed on December 23, 2024, which is incorporated herein by reference in its entirety.

TECHNICAL FIELD

Embodiments of the present disclosure relate to a virtual machine orchestration scheduling method, an electronic device and a storage medium.

BACKGROUND

With the development of technologies, the scale of computing resources required by some enterprises is increasing day by day, and the problem of resource fragmentation in the cloud computing environment is becoming more and more prominent. A large number of resource fragments occupy physical machines, resulting in tight inventory of large specifications, and small specification fragment resources are basically idle and difficult to be utilized. In order to solve the problem of resource fragmentation and improve resource utilization, it is desired to perform secondary scheduling on virtual machines that have been deployed in each physical machine in the cloud environment to rearrange the virtual machines, thereby freeing up empty physical machines or large specification inventory.

In the related art, a traditional heuristic algorithm is usually used to rearrange the virtual machines deployed in each physical machine, which often falls into a local optimal solution, and there is a significant gap in orchestration quality compared with a global optimal solution. Due to the complexity of scheduling constraints, if the global optimal solution is to be solved, a global optimization modeling scheme of "specifically which physical machine a virtual machine is deployed on" is required, which often requires a long solution time, and is of high cost and low efficiency.

SUMMARY

In a first aspect, an embodiment of the present disclosure provides a virtual machine orchestration scheduling method, including:

in response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, where the first deployment plan includes a predicted deployment number of each type of initial virtual machine in each physical machine without considering a virtual machine anti-affinity constraint;

determining, according to an initial deployment situation of each type of initial virtual machine in each physical machine and the first deployment plan, an initial virtual machine to be migrated out in each type of initial virtual machine in each physical machine;

determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered; and

performing virtual machine scheduling according to the first deployment plan and the second deployment plan.

In a second aspect, an embodiment of the present disclosure provides a virtual machine orchestration scheduling device, including:

a first orchestration unit, configured to: in response to a virtual machine secondary scheduling request, create a first virtual machine planning model according to a deployment attribute feature of an initial virtual machine deployed on a physical machine, and determine a first deployment plan that minimizes a total scheduling cost according to the first virtual machine planning model, where the first deployment plan includes a predicted deployment number of each type of initial virtual machine in each physical machine without considering a virtual machine anti-affinity constraint; and determine, according to an initial deployment situation of each type of initial virtual machine in each physical machine and the first deployment plan, an initial virtual machine to be migrated out in each type of initial virtual machine in each physical machine;

a second orchestration unit, configured to: determine a target initial virtual machine to be migrated out with an anti-affinity constraint in the initial virtual machine to be migrated out, create a second virtual machine planning model for the target initial virtual machine to be migrated out, and determine a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered; and

a scheduling unit, configured to perform virtual machine scheduling according to the first deployment plan and the second deployment plan.

In a third aspect, an embodiment of the present disclosure provides an electronic device, including: a processor and a memory;

where the memory stores computer-executable instructions;

the processor executes the computer-executable instructions stored in the memory to enable the at least one processor to execute the virtual machine orchestration scheduling method according to the first aspect and various possible designs of the first aspect above.

In a fourth aspect, an embodiment of the present disclosure provides a computer-readable storage medium having computer-executable instructions stored thereon, where when a processor executes the computer-executable instructions, the virtual machine orchestration scheduling method according to the first aspect and various possible designs of the first aspect above is implemented.

In a fifth aspect, an embodiment of the present disclosure provides a computer program product, including a computer program, where when the computer program is executed by a processor, the virtual machine orchestration scheduling method according to the first aspect and various possible designs of the first aspect above is implemented.

According to the virtual machine orchestration scheduling method and device provided by the embodiments of the present disclosure, a first virtual machine planning model is created according to a deployment attribute feature of an initial virtual machine deployed on a physical machine in response to a virtual machine secondary scheduling request, and a first deployment plan that minimizes a total scheduling cost is determined according to the first virtual machine planning model, where the first deployment plan includes a predicted deployment number of each type of initial virtual machine in each physical machine without considering a virtual machine anti-affinity constraint; an initial virtual machine to be migrated out in each type of initial virtual machine in each physical machine is determined according to an initial deployment situation of each type of initial virtual machine in each physical machine and the first deployment plan; a target initial virtual machine to be migrated out with an anti-affinity constraint is determined in the initial virtual machine to be migrated out, a second virtual machine planning model is created for the target initial virtual machine to be migrated out, and a second deployment plan that minimizes a scheduling cost of the target initial virtual machine to be migrated out is determined according to the second virtual machine planning model, where the second deployment plan includes a target physical machine to which each target initial virtual machine to be migrated out is to be deployed on the premise that the virtual machine anti-affinity constraint is considered; and virtual machine scheduling is performed according to the first deployment plan and the second deployment plan. According to the embodiments of the present disclosure, by using multi-stage orchestration scheduling, the model can be simplified, and the deployment plan for virtual machine orchestration scheduling with complex constraints can be solved accurately and efficiently, thereby improving the efficiency and success rate of virtual machine orchestration scheduling, and also improving resource utilization and reducing orchestration scheduling cost.

BRIEF DESCRIPTION OF DRAWINGS

In order to more clearly illustrate the technical solutions in the embodiments of the present disclosure or in the related art, the following will briefly introduce the drawings that need to be used in the description of the embodiments or the related art. Obviously, the drawings in the following description are some embodiments of the present disclosure. For those of ordinary skill in the art, other drawings may be obtained based on these drawings without creative efforts.

Fig. 1 is a schematic diagram of a scenario of a virtual machine orchestration scheduling method provided by an embodiment of the present disclosure;

Fig. 2 is a schematic flowchart of a virtual machine orchestration scheduling method provided by an embodiment of the present disclosure;

Fig. 3 is a structural block diagram of a virtual machine orchestration scheduling device provided by an embodiment of the present disclosure; and

Fig. 4 is a schematic diagram of a hardware structure of a virtual machine orchestration scheduling device provided by an embodiment of the present disclosure.

DETAILED DESCRIPTION

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, not all of them. Based on the embodiments in the present disclosure, all other embodiments obtained by persons of ordinary skill in the art without creative efforts fall within the protection scope of the present disclosure.

In the related art, a traditional heuristic algorithm is usually used to rearrange the virtual machines deployed in each physical machine, which often falls into a local optimal solution, and there is a significant gap in orchestration quality compared with a global optimal solution. Due to the complexity of scheduling constraints, if the global optimal solution is to be solved, a global optimization modeling scheme of "specifically which physical machine a virtual machine is deployed on" is required, which often requires a long solution time, and is of high cost and low efficiency.

In order to solve the above technical problems, an embodiment of the present disclosure provides a virtual machine orchestration scheduling method. In the method, a first virtual machine planning model is created according to a deployment attribute feature of an initial virtual machine deployed on a physical machine in response to a virtual machine secondary scheduling request, and a first deployment plan that minimizes a total scheduling cost is determined according to the first virtual machine planning model, where the first deployment plan includes a predicted deployment number of each type of initial virtual machine in each physical machine without considering a virtual machine anti-affinity constraint; an initial virtual machine to be migrated out in each type of initial virtual machine in each physical machine is determined according to an initial deployment situation of each type of initial virtual machine in each physical machine and the first deployment plan; a target initial virtual machine to be migrated out with an anti-affinity constraint is determined in the initial virtual machine to be migrated out, a second virtual machine planning model is created for the target initial virtual machine to be migrated out, and a second deployment plan that minimizes a scheduling cost of the target initial virtual machine to be migrated out is determined according to the second virtual machine planning model, where the second deployment plan includes a target physical machine to which each target initial virtual machine to be migrated out is to be deployed on the premise that the virtual machine anti-affinity constraint is considered; and virtual machine scheduling is performed according to the first deployment plan and the second deployment plan. According to the embodiments of the present disclosure, by using multi-stage orchestration scheduling, the model can be simplified, and the deployment plan for virtual machine orchestration scheduling with complex constraints can be solved accurately and efficiently, thereby improving the efficiency and success rate of virtual machine orchestration scheduling, and also improving resource utilization and reducing orchestration scheduling cost.

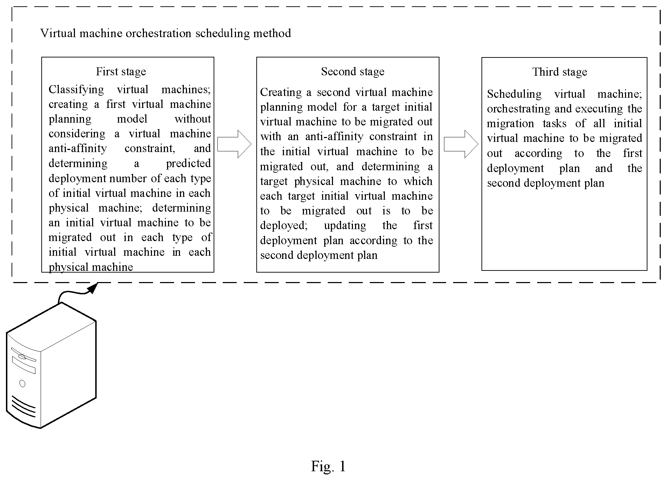

An application scenario of the virtual machine orchestration scheduling method according to the embodiments of the present disclosure is shown in Fig. 1, which may include three stages. In a first stage, virtual machines are classified, and a first virtual machine planning model is created without considering a virtual machine anti-affinity constraint. Solved with a virtual machine type as a granularity, a predicted deployment number of each type of initial virtual machine in each physical machine is determined as a first deployment plan, and an initial virtual machine to be migrated out in each type of initial virtual machine in each physical machine is determined according to an initial deployment situation of each type of initial virtual machine in each physical machine and the first deployment plan.

In a second stage, a second virtual machine planning model is created for a target initial virtual machine to be migrated out with an anti-affinity constraint in the initial virtual machine to be migrated out, and a target physical machine to which each target initial virtual machine to be migrated out is to be deployed is determined on the premise that the virtual machine anti-affinity constraint is considered, as a second deployment plan; and the first deployment plan is updated according to the second deployment plan, that is, the second deployment plan is integrated with the first deployment plan.

In a third stage, virtual machine scheduling is performed according to the first deployment plan and the second deployment plan.

The virtual machine orchestration scheduling method of the present disclosure will be described in detail below in conjunction with specific embodiments.

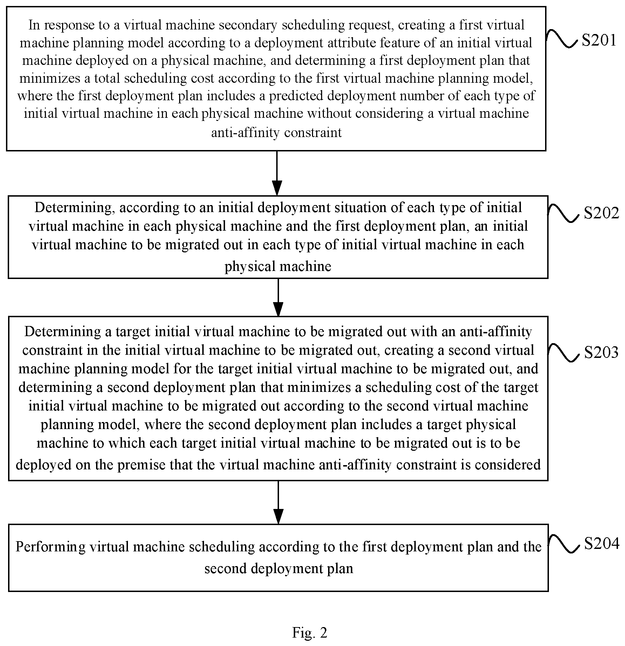

Referring to Fig. 2, Fig. 2 is a schematic flowchart of a virtual machine orchestration scheduling method provided by an embodiment of the present disclosure. The method of this embodiment may be applied to any electronic device such as a terminal device or a server. The virtual machine orchestration scheduling method includes:

S201: in response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, where the first deployment plan includes a predicted deployment number of each type of initial virtual machine in each physical machine without considering a virtual machine anti-affinity constraint.

In this embodiment, in a scenario of secondary scheduling of virtual machines in response to the virtual machine secondary scheduling request, the initial virtual machines deployed in each physical machine need to be rearranged and scheduled, so as to free up the whole machine or large-scale space and improve the sales rate. In order to realize rearranging and scheduling the initial virtual machines deployed in each physical machine, in this embodiment, a first virtual machine planning model may be created according to the deployment attribute feature of the initial virtual machine deployed on the physical machine, and then a virtual machine deployment plan is determined based on the first virtual machine planning model. The first virtual machine planning model is a model for solving a virtual machine deployment plan with a virtual machine type as a granularity without considering a virtual machine anti-affinity constraint. Specifically, the first virtual machine planning model may be a solving model represented by a function relationship (including solving a decision variable using a model optimization objective and a model optimization condition), or may be a model constructed by any tool or a machine learning model (which may make the model optimization objective and the model optimization condition as inputs, and output the decision variable).

Specifically, an objective of the first virtual machine planning model is to determine the predicted deployment number of each type of virtual machine in each physical machine without considering the virtual machine anti-affinity constraint, so as to minimize the total scheduling cost and obtain the first deployment plan. The anti-affinity constraint means that two virtual machines are deployed separately as much as possible, including different situations such as not allowing to be deployed on the same physical machine, not allowing to be deployed on physical machines in the same rack, and not allowing to be deployed on physical machines in the same switch. In this embodiment, the virtual machine anti-affinity constraint is not considered in the first virtual machine planning model, so as to simplify the model, reduce the model complexity and improve the processing efficiency. The virtual machine anti-affinity constraint is considered subsequently, and still a good effect of orchestration scheduling may be achieved. Moreover, in this embodiment, the virtual machines are orchestrated and scheduled with the category as the granularity, which may simplify the first virtual machine planning model and reduce the scale of model solving. The type of the virtual machine may adopt an equivalence class, and the classification of the virtual machine type may be realized by using some equivalence methods or rules, for example, based on a usage amount of one or more resources of the virtual machine, or any other method may be used to classify the virtual machines.

Optionally, the total scheduling cost in this embodiment may include, but is not limited to, one or more of the following costs: a migration cost of the initial virtual machine to be migrated out, a cost of resource fragmentation generated after remaining resources of each physical machine are used to create a to-be-created virtual machine of a target type, and a physical machine occupancy cost. The migration cost of the initial virtual machine to be migrated out may consider factors such as technical cost, time cost and economic cost, and the migration cost of each type of initial virtual machine may be different. The cost of the resource fragmentation generated after the remaining resources of each physical machine are used to create the to-be-created virtual machine of the target type refers to that when the remaining resources of each physical machine are subsequently sold, one or more to-be-created virtual machines of a certain target type may be specified to be created, until the remaining resources of the physical machine cannot continue to create the to-be-created virtual machine of the target type. At this time, the remaining resources of the physical machine are the resource fragments. When different deployment plans are adopted, the predicted deployment number of each type of virtual machine deployed on the physical machine is different, and a resource fragmentation rate of the physical machine will also be different. Therefore, the resource fragments may also be considered in the total scheduling cost as the cost. The physical machine occupancy cost means that there will be an operation and maintenance cost, an energy consumption cost and so on for each occupied physical machine.

The first virtual machine planning model may be an integer programming model.

S202: determining, according to an initial deployment situation of each type of initial virtual machine in each physical machine and the first deployment plan, an initial virtual machine to be migrated out in each type of initial virtual machine in each physical machine.

In this embodiment, after the first deployment plan is determined, because the first deployment plan is deployed with the category of the virtual machine as the granularity, that is, only the predicted deployment number of each type of initial virtual machine in each physical machine may be determined, or further, the number of initial virtual machines to be migrated out in each type of initial virtual machine in each physical machine may be determined, but a specific initial virtual machine to be migrated out is not determined. Therefore, it is necessary to further determine the specific initial virtual machine to be migrated out in each type of initial virtual machine in each physical machine based on the initial deployment situation of each type of initial virtual machine in each physical machine and the first deployment plan.

During specific implementation, a target number of each type of initial virtual machine to be migrated out in each physical machine is determined according to the initial deployment situation of each type of initial virtual machine in each physical machine and the first deployment plan. For example, it is assumed that 10 initial virtual machines of type i are deployed in the kth physical machine, and the predicted deployment number of the initial virtual machines of type i in the kth physical machine in the first deployment plan is 8, then the target number of the initial virtual machines to be migrated out of type i in the kth physical machine is 10-8=2. Further, the initial virtual machine to be migrated out may be determined from each type of initial virtual machine in each physical machine according to the target number of each type of initial virtual machine to be migrated out in each physical machine.

The initial virtual machine to be migrated out in each type of initial virtual machine in each physical machine may be determined by any method or rule, for example, by a heuristic solution or by random selection.

Optionally, an initial virtual machine without an anti-affinity constraint is preferentially selected from each type of initial virtual machine in each physical machine, and in response to a number of the initial virtual machines without the anti-affinity constraint in each type of initial virtual machine in each physical machine being less than a corresponding target number, an initial virtual machine with the anti-affinity constraint is then selected. The initial virtual machine without the anti-affinity constraint is preferentially selected in order to reduce the number of initial virtual machines with the anti-affinity constraint, thereby reducing the calculation amount in S203 below and improving the efficiency.

Certainly, when the initial virtual machine without the anti-affinity constraint is preferentially selected from each type of initial virtual machine in each physical machine, there may be many different situations. For example, if the number of initial virtual machines without the anti-affinity constraint in the initial virtual machines of type i in the kth physical machine is greater than or equal to the target number of initial virtual machines to be migrated out of type i in the kth physical machine, the selected initial virtual machines are all initial virtual machines without the anti-affinity constraint. If the number of initial virtual machines without the anti-affinity constraint in the initial virtual machines of type i in the kth physical machine is less than the target number of initial virtual machines to be migrated out of type i in the kth physical machine, but greater than 0, all the initial virtual machines without the anti-affinity constraint in the initial virtual machines of type i in the kth physical machine are selected, but at this time, the number is less than the target number, and the insufficient number is selected from the initial virtual machines with the anti-affinity constraint in the initial virtual machines of type i in the kth physical machine. If the number of initial virtual machines without the anti-affinity constraint in the initial virtual machines of type i in the kth physical machine is 0, all need to be selected from the initial virtual machines with the anti-affinity constraint in the initial virtual machines of type i in the kth physical machine.

S203: determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered.

In this embodiment, after the virtual machine to be migrated is determined, the target initial virtual machine to be migrated out with the anti-affinity constraint may be determined from the virtual machine to be migrated, and the second virtual machine planning model is created for the scheduling process of the target initial virtual machine to be migrated out. The second virtual machine planning model needs to consider the virtual machine anti-affinity constraint, and determine, on the premise that the virtual machine anti-affinity constraint is considered, the target physical machine to which each target initial virtual machine to be migrated out is to be deployed with the anti-affinity constraint, so that after each target initial virtual machine to be migrated out with the anti-affinity constraint is deployed to the target physical machine, there is no anti-affinity with other virtual machines in the target physical machine, including but not limited to one or more different anti-affinity situations such as not allowing to be deployed on the same physical machine as another virtual machine, not allowing to be deployed on physical machines in the same rack, and not allowing to be deployed on physical machines in the same switch. Optionally, the second virtual machine planning model is a model for solving a virtual machine deployment plan for the target initial virtual machine to be migrated out with the anti-affinity constraint on the premise that the virtual machine anti-affinity constraint is considered. Specifically, the second virtual machine planning model may be a solving model represented by a function relationship (including solving a decision variable using a model optimization objective and a model optimization condition), or may be a model constructed by any tool or a machine learning model (which may make the model optimization objective and the model optimization condition as inputs, and output the decision variable).

Certainly, if the initial virtual machines to be migrated out are all target initial virtual machines to be migrated out without the anti-affinity constraint, S203 may be skipped.

The second virtual machine planning model may be an integer programming model.

S204: performing virtual machine scheduling according to the first deployment plan and the second deployment plan.

In this embodiment, after the first deployment plan and the second deployment plan are determined, the first deployment plan and the second deployment plan may be integrated, and the virtual machine scheduling is performed according to the first deployment plan and the second deployment plan. Specifically, each target initial virtual machine to be migrated out with the anti-affinity constraint is deployed to the corresponding target physical machine, and the target initial virtual machine to be migrated without the anti-affinity constraint is migrated out and migrated to a physical machine with an insufficient predicted deployment number of the corresponding type of virtual machine, or the predicted migration-in number of each type of virtual machine in each physical machine may be further determined, and then the target initial virtual machine to be migrated without the anti-affinity constraint is migrated in according to the predicted migration-in number and the target physical machine to which each target initial virtual machine to be migrated out is to be deployed with the anti-affinity constraint. Finally, the number of each type of initial virtual machine in each physical machine meets the corresponding predicted deployment number.

Optionally, when the virtual machine scheduling is performed according to the first deployment plan and the second deployment plan, considering that the bandwidth is limited, it is impossible to complete the migration of all initial virtual machines to be migrated at one time. Therefore, it is necessary to arrange and execute a migration task for all initial virtual machines to be migrated out according to the updated deployment plan, especially to arrange a migration batch and sequence of each initial virtual machine to be migrated out, so that the migration task satisfies: when each initial virtual machine to be migrated out is migrated, it is ensured that the target physical machine to be migrated to has enough resources to accommodate the initial virtual machine to be migrated out, and the anti-affinity constraint condition is satisfied, that is, each virtual machine (including the initial virtual machine to be migrated out that has not been migrated, the initial virtual machine that does not need to be migrated, and the virtual machine that has been migrated in) in each physical machine at any moment of the migration process needs to meet the anti-affinity constraint, so as to ensure that there will be no constraint conflict during the migration process, thereby improving the overall migration efficiency and success rate.

Optionally, when arranging the migration task for all initial virtual machines to be migrated out, any heuristic method or any other feasible method may be used for arrangement, which is not limited here.

According to the virtual machine orchestration scheduling method provided by this embodiment, a first virtual machine planning model is created according to a deployment attribute feature of an initial virtual machine deployed on a physical machine in response to a virtual machine secondary scheduling request, and a first deployment plan that minimizes a total scheduling cost is determined according to the first virtual machine planning model, where the first deployment plan includes a predicted deployment number of each type of initial virtual machine in each physical machine without considering a virtual machine anti-affinity constraint; an initial virtual machine to be migrated out in each type of initial virtual machine in each physical machine is determined according to an initial deployment situation of each type of initial virtual machine in each physical machine and the first deployment plan; a target initial virtual machine to be migrated out with an anti-affinity constraint is determined in the initial virtual machine to be migrated out, a second virtual machine planning model is created for the target initial virtual machine to be migrated out, and a second deployment plan that minimizes a scheduling cost of the target initial virtual machine to be migrated out is determined according to the second virtual machine planning model, where the second deployment plan includes a target physical machine to which each target initial virtual machine to be migrated out is to be deployed on the premise that the virtual machine anti-affinity constraint is considered; and virtual machine scheduling is performed according to the first deployment plan and the second deployment plan. According to this embodiment, by using multi-stage orchestration scheduling, the model can be simplified, and the deployment plan for virtual machine orchestration scheduling with complex constraints can be solved accurately and efficiently, thereby improving the efficiency and success rate of virtual machine orchestration scheduling, and also improving resource utilization and reducing orchestration scheduling cost.

On the basis of any of the above embodiments, a first model optimization objective and a first model constraint condition are constructed by using a first decision variable to be solved, where the first decision variable includes the predicted deployment number of each type of initial virtual machine in each physical machine, a predicted creation number of to-be-created virtual machines of a target type, and the predicted occupancy state of each physical machine; the first model optimization objective is the total scheduling cost, and the total scheduling cost is a weighted sum of a migration cost of the initial virtual machine to be migrated out, a cost of resource fragmentation generated after remaining resources of each physical machine are used to create the to-be-created virtual machines of the target type, and a physical machine occupancy cost; and the first model constraint condition is a constraint condition related to the first decision variable without considering the virtual machine anti-affinity constraint, where the first model constraint condition may include, but is not limited to, a constraint condition related to the number of each type of virtual machine, a constraint condition related to occupied resources, a constraint condition on the number of migrations, and so on, but does not include the anti-affinity constraint condition.

Furthermore, it may be determined that, in response to the first model constraint condition being met, the first decision variable that minimizes the first model optimization objective is used as the first deployment plan, that is, the predicted deployment number of each type of initial virtual machine in each physical machine, the predicted creation number of to-be-created virtual machines of the target type additionally created by each physical machine, and the predicted occupancy state of each physical machine are solved as the first deployment plan.

Certainly, the predicted deployment number of each type of initial virtual machine in each physical machine to be solved, the predicted creation number of to-be-created virtual machines of the target type, and the predicted occupancy state of each physical machine are decision variables that mainly need to be solved by the first virtual machine planning model, and of course, other decision variables may also be included.

Optionally, each physical machine may include two Non Uniform Memory Access (NUMA) nodes. In the NUMA architecture, the CPU of the physical machine is usually divided into each NUMA node. Each NUMA node has its own independent memory space and PCIE (Peripheral Component Interconnect Express) bus system, and each CPU communicates with each other through a QPI (Intel QuickPath Interconnect) bus. Some types of virtual machines need to be deployed on a single NUMA node of the physical machine, and some types of virtual machines need to be deployed on two NUMA nodes of the physical machine. Therefore, when determining the first deployment plan, the above problems also need to be considered, that is, the first decision variable further includes a predicted deployment number of each type of initial virtual machine in each NUMA node of each physical machine, and a constraint condition related to the NUMA of the physical machine may be added to the constraint condition of the first target function. Furthermore, when the first target function is solved based on the constraint condition of the first target function, the predicted deployment number of each type of initial virtual machine in each physical machine, the predicted deployment number of each type of initial virtual machine in each NUMA node of each physical machine, the predicted creation number of to-be-created virtual machines of the target type additionally created by each physical machine, and the predicted occupancy state of each physical machine may be determined, and a more accurate first deployment plan may be obtained.

On the basis of the above embodiment, the first model constraint condition may include, but is not limited to, one or more of the following:

1) a constraint condition on a deployment situation of the initial virtual machine with dual NUMA and the initial virtual machine with single NUMA on two NUMA nodes of the physical machine. Specifically, the initial virtual machine with dual NUMA needs to be deployed on both NUMA nodes of the physical machine, which essentially belongs to the same virtual machine, and the initial virtual machine with single NUMA only is deployed on a certain NUMA node of the physical machine;

2) a constraint condition that the initial virtual machine to be migrated out is migrated in and out of the two NUMA nodes of the physical machine at the same time, that is, to avoid migration on different NUMAs of the same physical machine during migration in or out;

3) a constraint condition that a number of each type of initial virtual machine is unchanged before and after scheduling;

4) a constraint condition on occupied resources of each type of initial virtual machine in each physical machine, that is, a total amount of resources occupied by each type of initial virtual machine in each physical machine cannot exceed an amount of resources of the physical machine. Optionally, a total amount of resources occupied by virtual machines deployed on each NUMA node of the physical machine cannot exceed an amount of resources of the NUMA node;

5) a constraint condition on a relationship between the predicted deployment number of each type of initial virtual machine in each physical machine and the predicted occupancy state of each physical machine, that is, if the predicted deployment number of any type of initial virtual machine in each physical machine is not 0, the physical machine is occupied;

6) a constraint condition on a relationship between the predicted creation number of to-be-created virtual machines of the target type additionally created in each physical machine and the remaining resources of each physical machine, that is, the resources occupied by additionally creating the predicted creation number of to-be-created virtual machines of the target type in each physical machine cannot exceed the remaining amount of resources of the physical machine. Optionally, the resources occupied by additionally creating the predicted creation number of to-be-created virtual machines of the target type on each NUMA node of the physical machine cannot exceed the remaining amount of resources of the NUMA node; and

7) a constraint condition on an upper limit of a total number of migrations in the scheduling process, that is, the total number of migrations is reduced as much as possible, and the upper limit of the total number of migrations may be preset to avoid that the total number of migrations in the scheduling process exceeds the upper limit of the total number of migrations.

8) a constraint condition that a specific initial virtual machine is not allowed to be migrated, that is, some virtual machines are not allowed to be migrated.

On the basis of the above embodiment, this embodiment provides a specific first virtual machine planning model, which is as follows.

The first decision variable to be solved in the first virtual machine planning model includes:

$x_{i,k}$, which represents the predicted deployment number of the initial virtual machines of type i in the kth physical machine;

$\tilde{x}_{i,k,j}$, which represents the predicted deployment number of the initial virtual machines of type i in the jth NUMA in the kth physical machine;

$x_{i,k}^{in}$, which represents the number of initial virtual machines of type i that need to be migrated into the kth physical machine;

$s_k$, which represents the predicted occupancy state of the kth physical machine, and a value of which is 0 or 1, where 0 represents not occupied, and 1 represents occupied;

$e_{i,k}$, which represents the predicted creation number of to-be-created virtual machines of type i additionally created by the kth physical machine;

$signal_{i,k}$ which represents whether there is a migration-in operation for the initial virtual machines of type i in the kth physical machine, where 1 represents that there is a migration-in, and 0 represents that there is a migration-out; and parameters in the first virtual machine planning model include:

$y_{i,k}$, which represents the initial deployment number of the initial virtual machines of type i in the kth physical machine in the initial deployment situation;

$\hat{y}_{i,k,j}$, which represents the initial deployment number of the initial virtual machines of type i in the jth NUMA unit in the kth physical machine in the initial deployment situation;

$d_i$, which represents the total number of initial virtual machines of type i;

$d_i^r$, which represents the usage amount of the initial virtual machines of type i for the rth resource;

$U_k^r$, which represents the amount of the rth resource of the kth physical machine;

$c_i$, which represents the migration cost of the initial virtual machines of type i;

$l_{i,k,j}$, which represents the number of virtual machines of type i that are not allowed to be migrated in the jth NUMA of the kth physical machine;

$f_i$, which represents a fragmentation rate weight of the virtual machines of type i, where in response to only the to-be-created virtual machines of the target type being created, the fragmentation rate weight of the to-be-created virtual machines of the target type is 1, and the fragmentation rate weights of the remaining types of virtual machines are 0;

$M$, which represents a relatively large natural number, for example, may be greater than the total number of initial virtual machines, or other values;

$MI$, which represents the upper limit of the total number of migrations in the scheduling process;

$numa\_d$, which represents a mapping between the number of NUMAs and the types of virtual machines, for example, $numa\_d = \{1: [i_1, i_2, \dots, i_{n1}], 2: [i_{n1+1}, i_{n1+2}, \dots, i_{n2}]\}$, where the virtual machines of type $i_1, i_2, \dots, i_{n1}$ are virtual machines with single NUMA, and the virtual machines of type $i_{n1+1}, i_{n1+2}, \dots, i_{n2}$ are virtual machines with dual NUMA;

$w_r$, which represents a migration loss weight, that is, a weight of the migration cost of the initial virtual machines to be migrated out;

$w_f$, which represents a fragmentation rate loss weight, that is, a weight of the cost of resource fragmentation generated after the remaining resources of each physical machine are used to create the to-be-created virtual machines of the target type; and

$w_p$, which represents a physical machine usage loss weight, that is, a weight of the physical machine occupancy cost.

Furthermore, the first virtual machine planning model is created as follows.

The migration cost of the initial virtual machines to be migrated out is as follows:

$$\sum_k \sum_i c_i \, x_{i,k}^{in}$$

The cost of resource fragmentation generated after the remaining resources of each physical machine are used to create the to-be-created virtual machines of the target type is as follows:

$$\sum_i \left[ \frac{\sum_k U_k^r - \sum_t d_t \cdot d_t^r - \sum_k d_i^r \cdot e_{i,k}}{\sum_k U_k^r - \sum_t d_t \cdot d_t^r} \right] f_i$$

where $d_t$ represents the number of deployed virtual machines of type t in all physical machines, and $d_i^r$ represents the usage amount of the deployed virtual machines of type t for the rth resource, where a denominator represents the total remaining amount of resources of all physical machines, and a numerator represents the amount of resources of resource fragmentation generated after the to-be-created virtual machines of the target type are created based on the total remaining amount of resources. Since $f_i$ of the to-be-created virtual machines of the target type is 1 and $f_i$ of the remaining types of virtual machines are 0, this formula represents the resource fragmentation rate after only the to-be-created virtual machines of the target type are created.

The number of occupied physical machines is as follows:

$$\sum_k s_k$$

Therefore, the first model optimization objective is as follows:

$$minimize \ w_r \sum_k \sum_i c_i \ x_{i,k}^{in} + w_f \sum_i \left[ \frac{\sum_k U_{k}^{r} - \sum_t d_t \cdot d_t^r - \sum_k d_i^r \cdot e_{i,k}}{\sum_k U_{k}^{r} - \sum_t d_t \cdot d_t^r} \right] f_i + w_p \sum_k s_k$$

That is, the weighted sum of the migration cost of the initial virtual machines to be migrated out, the cost of resource fragmentation generated after the remaining resources of each physical machine are used to create the to-be-created virtual machines of the target type, and the physical machine occupancy cost.

The first model constraint condition is as follows.

1) NUMA constraint: since the initial virtual machine with dual NUMA needs to be deployed on both NUMA nodes of the physical machine, and the initial virtual machine with single NUMA only is deployed on a certain NUMA node of the physical machine, it is represented as follows:

$$\tilde{x}_{i,k,0} = \tilde{x}_{i,k,1} \quad if \ i \in numa\_d[2]$$

$$x_{i,k} = \tilde{x}_{i,k,0} \quad if \ i \in numa\_d[2]$$

$$x_{i,k} = \left( \tilde{x}_{i,k,0} + \tilde{x}_{i,k,1} \right) \quad if \ i \in \leq numa\_d[1]$$

That is, for the initial virtual machine with $i \in numa_{d[2]}$, that is, the initial virtual machine with dual NUMA, in two NUMA units in the kth physical machine, the predicted deployment numbers of the same type of initial virtual machines are the same, and are equal to the predicted deployment number of the virtual machines of type i in the kth physical machine. For the initial virtual machine with $i \in \leq numa_{d[1]}$, that is, the initial virtual machine with single NUMA, in two NUMA units in the kth physical machine, the predicted deployment numbers of the same type of initial virtual machines add up to the predicted deployment number of the virtual machines of type i in the kth physical machine.

2) Constraint condition that the initial virtual machine to be migrated out is migrated in and out of the two NUMA nodes of the physical machine at the same time: to avoid the migration of the virtual machine between different NUMAs of the same physical machine, an intermediate variable is established to represent the migration-in/migration-out operation for the ith type of initial virtual machine:

$$\begin{cases} \tilde{x}_{i,k,j} - \tilde{y}_{i,k,j} \leq Msignal_{i,k} \\ \tilde{x}_{i,k,j} - \tilde{y}_{i,k,j} \geq -M\left(1 - signal_{i,k}\right) \end{cases} \quad i = 1, \dots, N; k = 1, \dots, K; j = 1,2$$

where, on the kth physical machine, for the ith type of initial virtual machine, if it is migration-out, $\tilde{x}_{i,k,j} - \tilde{y}_{i,k,j}$ of both the 1st NUMA unit and the 2nd NUMA unit in the kth physical machine are negative values; and if it is migration-in, $\tilde{x}_{i,k,j} - \tilde{y}_{i,k,j}$ of both the 1st NUMA unit and the 2nd NUMA unit in the kth physical machine are positive values.

3) Constraint condition that the number of each type of initial virtual machine is unchanged before and after scheduling:

$$\sum_k x_{i,k} = d_i, i = 1, \dots, N$$

4) Constraint condition on occupied resources of each type of initial virtual machine in each physical machine: the total amount of resources occupied by virtual machines deployed on each NUMA node of each physical machine cannot exceed the amount of resources of the NUMA node:

$$\sum_{i \in numa_{d[1]}} d_i^r \tilde{x}_{i,k,j} + \sum_{i \in numa_{d[2]}} \frac{d_i^r \tilde{x}_{i,k,j}}{2} \le \frac{U_k^r}{2}, k = 1, \dots, K; r = 1, \dots, R; j = 1,2$$

5) Constraint condition on the relationship between the predicted deployment number of each type of initial virtual machine in each physical machine and the predicted occupancy state of each physical machine, that is, if the predicted deployment number of any type of initial virtual machine in each physical machine is not 0, the physical machine is occupied. Whether the kth physical machine is occupied may be determined through the following inequality, and if the physical machine is not occupied, the right side of the inequality is 0:

$$x_{i,k} \le Ms_k, i = 1, \dots, N; k = 1, \dots, K$$

6) Constraint condition that a specific initial virtual machine is not allowed to be migrated:

$$l_{i,k,j} \le \tilde{x}_{i,k,j}, i = 1, \dots, N; k = 1, \dots, K; j = 1,2$$

7) The number of virtual machines of type i migrated into the kth physical machine needs to satisfy the following inequality, which is used to limit that the number of virtual machines migrated in is not a negative number:

$$x_{i,k}^{in} = max\{x_{i,k} - y_{i,k}, 0\}$$

8) Constraint condition on the relationship between the predicted creation number of to-be-created virtual machines of the target type additionally created in each physical machine and the remaining resources of each physical machine, that is, the predicted creation number of to-be-created virtual machines of the target type additionally created on each NUMA node of the kth physical machine depends on the remaining amount of resources of the NUMA node and the resources occupied by the to-be-created virtual machines of the target type (different formulas are adopted for the to-be-created virtual machines of the target type with single NUMA and the to-be-created virtual machines of the target type with dual NUMA):

$$e_{i,k} = \lfloor min_r [(U_k^r/2 - \sum_{t \in numa\_d[1]} d_t^r \tilde{x}_{t,k,0} - \sum_{t \in numa\_d[2]} d_t^r \tilde{x}_{t,k,0}/2)/d_i^r] \rfloor + \lfloor min_r [(U_k^r/2 - \sum_{t \in numa\_d[1]} d_t^r \tilde{x}_{t,k,1} - \sum_{t \in numa\_d[2]} d_t^r \tilde{x}_{t,k,1}/2)/d_i^r] \rfloor \quad i \in numa\_d[1]$$

$$e_{i,k} = \lfloor min_j\{min_r [(U_k^r/2 - \sum_{t \in numa\_d[1]} d_t^r \tilde{x}_{t,k,j} - \sum_{t \in numa\_d[2]} d_t^r \tilde{x}_{t,k,j}/2)/(d_i^r/2)]\} \rfloor \quad i \in numa\_d[2]$$

9) Constraint condition on the upper limit of the total number of migrations in the scheduling process:

$$\sum_k \sum_i x_{i,k}^{in} \le MI$$

The first model optimization objective is optimized based on the first model constraint condition, and it may be determined that, in response to the first model constraint condition being met, the first decision variable that minimizes the first model optimization objective is used as the first deployment plan. The solution method is not limited in this embodiment.

It should be noted that if the number of NUMA nodes included in each physical machine is greater than two, the above-related first decision variable, first model constraint condition, etc. may be adjusted adaptively according to the number of NUMA nodes.

On the basis of any of the above embodiments, the constructing the second virtual machine planning model includes: constructing a second model optimization objective and a second model constraint condition by using a second decision variable to be solved, where the second decision variable includes the target physical machine to which each target initial virtual machine to be migrated out is to be deployed; the second model optimization objective is the scheduling cost of the target initial virtual machine to be migrated out; and the second model constraint condition is a constraint condition related to the second decision variable on the premise that the virtual machine anti-affinity constraint is considered, where the second model constraint condition may include, but is not limited to, a constraint condition related to the number of each type of virtual machine, a constraint condition related to occupied resources, the anti-affinity constraint condition, and so on.

Furthermore, when the second virtual machine planning model is created, since it is only for the target initial virtual machine to be migrated out with the anti-affinity constraint in the initial virtual machine to be migrated out in the first deployment plan, the scheduling cost of the target initial virtual machine to be migrated out in the second virtual machine planning model may only consider the migration cost of the target initial virtual machine to be migrated out, that is, the second model optimization objective may be created based on the target physical machine to be solved to which each target initial virtual machine to be migrated out is to be deployed, and the second model optimization objective represents the scheduling cost of the target initial virtual machine to be migrated out.

Furthermore, it may be determined that, in response to the second model constraint condition being met, the second decision variable that minimizes the second model optimization objective is used as the second deployment plan.

Certainly, the target physical machine to be solved, to which each target initial virtual machine to be migrated out is to be deployed, is a decision variable that mainly needs to be solved by the second virtual machine planning model, and of course, other decision variables may also be included.

Optionally, in the case that each physical machine may include two NUMA nodes, the second decision variable further includes a target NUMA node to which each target initial virtual machine to be migrated out is to be deployed, and a constraint condition related to the NUMA of the physical machine may be added to the constraint condition of the second target function. Furthermore, when the second model optimization objective is solved based on the second model constraint condition, the target physical machine and the target NUMA node to which each target initial virtual machine to be migrated out is to be deployed may be determined as the second deployment plan.

On the basis of the above embodiment, the second model constraint condition may include, but is not limited to, one or more of the following:

1) a constraint condition that each target initial virtual machine to be migrated out only is deployed on one target physical machine;

2) a constraint condition, which is preconfigured, on whether each target initial virtual machine to be migrated out is allowed to be migrated, that is, whether a certain target initial virtual machine to be migrated out is allowed to be migrated may be preconfigured;

3) a constraint condition on occupied resources of each target initial virtual machine to be migrated out, that is, a total amount of resources occupied by all target initial virtual machines to be migrated out in each physical machine after migrating into the physical machine cannot exceed the amount of resources of the physical machine. More specifically, a total amount of resources occupied by all target initial virtual machines to be migrated out in any NUMA unit in each physical machine after migrating into the NUMA unit cannot exceed the amount of resources of the NUMA unit;

4) a constraint condition on a deployment situation of the target initial virtual machine to be migrated out with dual NUMA and the target initial virtual machine to be migrated out with single NUMA on two NUMA nodes of the physical machine, that is, the target initial virtual machine to be migrated out with dual NUMA needs to be deployed on both NUMA nodes of the physical machine, which essentially belongs to the same virtual machine, and the target initial virtual machine to be migrated out with single NUMA only is deployed on a certain NUMA node of the physical machine;

5) a constraint condition that the target initial virtual machine to be migrated out is migrated in and out of the two NUMA nodes of the physical machine at the same time, that is, to avoid migration on different NUMAs of the same physical machine during migration in or out; and

6) an anti-affinity constraint condition of the target initial virtual machine to be migrated out in at least one of a physical machine range, a rack range and a switch range. Two target initial virtual machines to be migrated out that are anti-affinity in the physical machine range cannot be deployed in the same physical machine, two target initial virtual machines to be migrated out that are anti-affinity in the rack range cannot be deployed in the same rack, and two target initial virtual machines to be migrated out that are anti-affinity in the switch range cannot be deployed in the same switch.

On the basis of the above embodiment, this embodiment provides a specific second virtual machine planning model (in which each decision variable and parameter are redefined, and the decision variables and parameters repeated with those in the first virtual machine planning model are subject to the definitions in this embodiment), which is as follows.

The second decision variable to be solved in the second virtual machine planning model includes:

$x_{i,k}$, which represents whether the ith target initial virtual machine to be migrated out is deployed in the kth physical machine, where 1 represents yes, and 0 represents no;

$\tilde{x}_{i,kj}$, which represents whether the ith target initial virtual machine to be migrated out is deployed in the jth NUMA unit in the kth physical machine, where 1 represents yes, and 0 represents no;

$x_{i,k}^{in}$, which represents whether the ith target initial virtual machine to be migrated out is migrated into the kth physical machine, where 1 represents yes, and 0 represents no; and

$signal_{i,k}$, which represents a migration-in/migration-out operation type of the ith target initial virtual machine to be migrated out in the kth physical machine, where 1 represents migration-in, and 0 represents migration-out.

The parameters in the second virtual machine planning model include:

$y_{i,k}$, which represents whether the ith target initial virtual machine to be migrated out is deployed in the kth physical machine in the initial deployment situation, where 1 represents yes, and 0 represents no;

$\tilde{y}_{i,kj}$, which represents whether the ith target initial virtual machine to be migrated out is deployed in the jth NUMA unit in the kth physical machine in the initial deployment situation, where 1 represents yes, and 0 represents no;

$d_i^r$, which represents the usage amount of the ith target initial virtual machine to be migrated out for the rth resource;

$U_k^r$, which represents the amount of the rth resource of the kth physical machine;

$c_i$, which represents the migration cost of the ith target initial virtual machine to be migrated out;

$l_i$, which represents whether the ith target initial virtual machine to be migrated out is allowed to be migrated;

$M$, which represents a relatively large natural number, for example, may be greater than the total number of target initial virtual machines to be migrated out, or other values;

$numa\_d$, which represents a mapping between the number of NUMAs and the types of virtual machines, for example, $numa\_d = \{1: [i_1, i_2, \ldots, i_{n1}], 2: [i_{n1+1}, i_{n1+2}, \ldots, i_{n2}]\}$, where the $i_1, i_2, \ldots, i_{n1}$ th target initial virtual machine to be migrated out is a virtual machine with single NUMA, and the $i_{n1+1}, i_{n1+2}, \ldots, i_{n2}$th target initial virtual machine to be migrated out is a virtual machine with dual NUMA;

$\Phi_n$, which represents the nth anti-affinity virtual machine set at the physical machine granularity, for example, $\Phi_n = [i_1^n, \ldots, i_t^n]$, which represents that the virtual machines $i_1^n, \ldots, i_t^n$ are not allowed to be deployed in the same physical machine pairwise;

$\Pi_m$, which represents the mth anti-affinity virtual machine set at the rack granularity, for example, $\Pi_m = [i_1^m, \ldots, i_t^m]$, which represents that the virtual machines $i_1^m, \ldots, i_t^m$ are not allowed to be deployed in the same rack pairwise;

$\Psi_s$, which represents the sth anti-affinity virtual machine set at the switch granularity, for example, $\Psi_s = [i_1^s, \ldots, i_t^s]$, which represents that the virtual machines $i_1^s, \ldots, i_t^s$ are not allowed to be deployed in the same switch pairwise;

$\Omega_p$, which represents a physical machine set included in the pth rack, for example, $\Omega_p =$ , which represents that the physical machines $k_1^p, \ldots, k_t^p$ belong to the same rack p; and

$\Theta_q$, which represents a physical machine set included in the qth switch, for example, $\Theta_q = [k_1^q, \ldots, k_t^q]$, which represents that the physical machines $k_1^q, \ldots, k_t^q$ belong to the same switch q.

Furthermore, the second model optimization objective of the second virtual machine planning model is created, that is, the migration cost of the target initial virtual machines to be migrated out:

$$minimize \sum_k \sum_i c_i x_{i,k}^{in}$$

The second model constraint condition is as follows.

1) Constraint condition that each target initial virtual machine to be migrated out only is deployed on one target physical machine:

$$\sum_{k=1}^{K} x_{i,k} = 1, i = 1, \dots, N$$

2) Constraint condition, which is preconfigured, on whether each target initial virtual machine to be migrated out is allowed to be migrated:

$$\sum_{k=1}^{K} x_{i,k}^{in} \leq l_i, i = 1, \dots, N$$

3) Constraint condition on occupied resources of each target initial virtual machine to be migrated out, that is, a total amount of resources occupied by all target initial virtual machines to be migrated out in any NUMA unit in each physical machine after migrating into the NUMA unit cannot exceed the amount of resources of the NUMA unit:

$$\sum_{i \in numa\_d[1]} d_i^r \tilde{x}_{i,k,j} + \sum_{i \in numa\_d[2]} d_i^r \tilde{x}_{i,k,j}/2 \leq U_k^r/2, k = 1, \dots, K; r = 1, \dots, R; j = 1,2$$

4) NUMA constraint, that is, a constraint condition on a deployment situation of the target initial virtual machine to be migrated out with dual NUMA and the target initial virtual machine to be migrated out with single NUMA on two NUMA nodes of the physical machine. Since the initial virtual machine with dual NUMA needs to be deployed on both NUMA nodes of the physical machine, and the initial virtual machine with single NUMA only is deployed on a certain NUMA node of the physical machine, it is represented as follows:

$$\tilde{x}_{i,k,0} = \tilde{x}_{i,k,1} \quad if \ i \in numa\_d[2]$$

$$x_{i,k} = \tilde{x}_{i,k,0} \quad if \ i \in numa\_d[2]$$

$$x_{i,k} = \left( \tilde{x}_{i,k,0} + \tilde{x}_{i,k,1} \right) \quad if \ i \in \leq numa\_d[1]$$

5) Constraint condition that the target initial virtual machine to be migrated out is migrated in and out of the two NUMA nodes of the physical machine at the same time, that is, to avoid migration on different NUMAs of the same physical machine during migration in or out, which is represented as follows:

$$\begin{cases} \tilde{x}_{i,k,j} - \tilde{y}_{i,k,j} \leq Msignal_{i,k} \\ \tilde{x}_{i,k,j} - \tilde{y}_{i,k,j} \geq -M\left( 1 - signal_{i,k} \right) \end{cases} \quad i = 1, \dots, N; k = 1, \dots, K; j = 1,2$$

6) Anti-affinity constraint condition of the target initial virtual machine to be migrated out in at least one of a physical machine range, a rack range and a switch range:

The anti-affinity constraint condition in the physical machine range is as follows, that is, the total deployment number of virtual machines with i ∈ $\Phi_n$ in the kth physical machine does not exceed 1:

$$\sum_{i \in \Phi_n} x_{i,k} \leq 1, k = 1, \dots, K; n = 1, \dots, NumAniAffineMachine$$

where *NumAniAffineMachine* represents the number of anti-affinity virtual machine sets at the physical machine granularity;
The anti-affinity constraint condition in the rack range is as follows, that is, the total deployment number of virtual machines with $i \in \Pi_m$ in the mth physical machine does not exceed 1:

$$\sum_{k \in \Omega_p} \sum_{i \in \Pi_m} x_{i,k} \leq 1, p = 1, \dots, NumRack; m = 1, \dots, NumAniAffineRack$$

where *NumRack* represents the number of racks; and *NumAniAffineRack* represents the number of anti-affinity virtual machine sets at the rack granularity; and

The anti-affinity constraint condition in the switch range is as follows, that is, the total deployment number of virtual machines with $i \in \Psi_S$ in the sth switch does not exceed 1:

$$\sum_{k \in \Theta_q} \sum_{i \in \Psi_s} x_{i,k} \leq 1, q = 1, \dots, NumSwitch; s = 1, \dots, NumAniAffineSwitch$$

where *NumSwitch* represents the number of switches, and *NumAniAffineswitch* represents the number of anti-affinity virtual machine sets at the switch granularity.

7) The number of the ith target initial virtual machine to be migrated out that is migrated into the kth physical machine needs to satisfy the following inequality, which is used to limit that the number of the ith target initial virtual machine to be migrated out that is migrated in is not a negative number:

$$x_{i,k}^{in} = max\{x_{i,k} - y_{i,k}, 0\}, i = 1, \dots, N, k = 1, \dots, K$$

The model optimization objective is optimized based on the second model constraint condition, and it may be determined that, in response to the second model constraint condition being met, the second decision variable that minimizes the second model optimization objective is used as the first deployment plan. The solution method is not limited in this embodiment.

It should be noted that if the number of NUMA nodes included in each physical machine is greater than two, the above-related second decision variable, second model constraint condition, etc. may be adjusted adaptively according to the number of NUMA nodes.

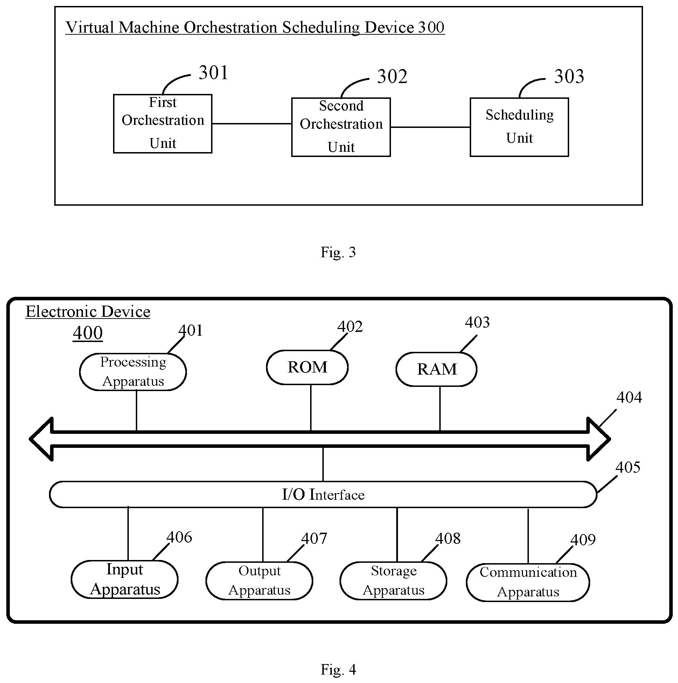

Corresponding to the virtual machine orchestration scheduling method of the above embodiment, Fig. 3 is a structural block diagram of a virtual machine orchestration scheduling device provided by an embodiment of the present disclosure. For convenience of explanation, only parts related to the embodiments of the present disclosure are shown. Referring to Fig. 3, the virtual machine orchestration scheduling device 300 includes: a first orchestration unit 301, a second orchestration unit 302, and a scheduling unit 303.

The first orchestration unit 301 is configured to: in response to a virtual machine secondary scheduling request, create a first virtual machine planning model according to a deployment attribute feature of an initial virtual machine deployed on a physical machine, and determine a first deployment plan that minimizes a total scheduling cost according to the first virtual machine planning model, where the first deployment plan includes a predicted deployment number of each type of initial virtual machine in each physical machine without considering a virtual machine anti-affinity constraint; and determine, according to an initial deployment situation of each type of initial virtual machine in each physical machine and the first deployment plan, an initial virtual machine to be migrated out in each type of initial virtual machine in each physical machine;

the second orchestration unit 302 is configured to: determine a target initial virtual machine to be migrated out with an anti-affinity constraint in the initial virtual machine to be migrated out, create a second virtual machine planning model for a scheduling process of the target initial virtual machine to be migrated out, and determine a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered; and

the scheduling unit 303 is configured to perform virtual machine scheduling according to the first deployment plan and the second deployment plan.

In one or more embodiments of the present disclosure, the first orchestration unit 301, when creating the first virtual machine planning model for the virtual machine scheduling process, is configured to:

construct a first model optimization objective and a first model constraint condition by using a first decision variable to be solved, where the first decision variable includes the predicted deployment number of each type of initial virtual machine in each physical machine, a predicted creation number of to-be-created virtual machines of a target type, and a predicted occupancy state of each physical machine; the first model optimization objective is the total scheduling cost, and the total scheduling cost is a weighted sum of a migration cost of the initial virtual machines to be migrated out, a cost of resource fragmentation generated after remaining resources of each physical machine are used to create the to-be-created virtual machines of the target type, and a physical machine occupancy cost; and the first model constraint condition is a constraint condition related to the first decision variable without considering the virtual machine anti-affinity constraint; and

accordingly, the first orchestration unit 301, when determining the first deployment plan that minimizes the total scheduling cost according to the first virtual machine planning model, is configured to:

determine that, in response to the first model constraint condition being met, a first decision variable that minimizes the first model optimization objective is used as the first deployment plan.

In one or more embodiments of the present disclosure, each physical machine includes two non-uniform memory access NUMA nodes; and the first decision variable further includes a predicted deployment number of each type of initial virtual machine in each NUMA node of each physical machine.

In one or more embodiments of the present disclosure, the first model constraint condition includes one or more of the following:

a constraint condition on a deployment situation of an initial virtual machine with dual NUMA and an initial virtual machine with single NUMA on two NUMA nodes of the physical machine;

a constraint condition that the initial virtual machine to be migrated out is migrated in and out of the two NUMA nodes of the physical machine at the same time;

a constraint condition that a number of each type of initial virtual machine is unchanged before and after scheduling;

a constraint condition on occupied resources of each type of initial virtual machine in each physical machine;

a constraint condition on a relationship between the predicted deployment number of each type of initial virtual machine in each physical machine and the predicted occupancy state of each physical machine;

a constraint condition on a relationship between the predicted creation number of to-be-created virtual machines of the target type additionally created in each physical machine and the remaining resources of each physical machine;

a constraint condition on an upper limit of a total number of migrations in the scheduling process; and

a constraint condition that a specific initial virtual machine is not allowed to be migrated.

In one or more embodiments of the present disclosure, the first orchestration unit 301, when determining, according to the initial deployment situation of each type of initial virtual machine in each physical machine and the first deployment plan, the initial virtual machine to be migrated out in each type of initial virtual machine in each physical machine, is configured to:

determine, according to the initial deployment situation of each type of initial virtual machine in each physical machine and the first deployment plan, a target number of each type of initial virtual machine to be migrated out in each physical machine; and

determine, according to the target number of each type of initial virtual machine to be migrated out in each physical machine, the initial virtual machine to be migrated out from each type of initial virtual machine in each physical machine.

In one or more embodiments of the present disclosure, the second orchestration unit 302, when determining, according to the target number of each type of initial virtual machine to be migrated out in each physical machine, the initial virtual machine to be migrated out from each type of initial virtual machine in each physical machine, is configured to: preferentially select, from each type of initial virtual machine in each physical machine, an initial virtual machine without an anti-affinity constraint, and in response to a number of the initial virtual machines without the anti-affinity constraint in each type of initial virtual machine in each physical machine being less than the corresponding target number, then select initial virtual machines with the anti-affinity constraint.

In one or more embodiments of the present disclosure, the second orchestration unit 302, when creating the second virtual machine planning model for the target initial virtual machine to be migrated out, is configured to:

construct a second model optimization objective and a second model constraint condition by using a second decision variable to be solved, where the second decision variable includes the target physical machine to which each target initial virtual machine to be migrated out is to be deployed; the second model optimization objective is the scheduling cost of the target initial virtual machines to be migrated out; and the second model constraint condition is a constraint condition related to the second decision variable on the premise that the virtual machine anti-affinity constraint is considered; and

accordingly, the second orchestration unit 302, when determining the second deployment plan that minimizes the scheduling cost of the target initial virtual machine to be migrated out according to the second virtual machine planning model, is configured to:

determine that, in response to the second model constraint condition being met, a second decision variable that minimizes the second model optimization objective is used as the second deployment plan.

In one or more embodiments of the present disclosure, each physical machine includes two NUMA nodes; and the second decision variable further includes a target NUMA node to which each target initial virtual machine to be migrated out is to be deployed.

In one or more embodiments of the present disclosure, the second model constraint condition includes one or more of the following:

a constraint condition that each target initial virtual machine to be migrated out only is deployed on one target physical machine;
a constraint condition, which is preconfigured, on whether each target initial virtual machine to be migrated out is allowed to be migrated;
a constraint condition on occupied resources of each target initial virtual machine to be migrated out;
a constraint condition on a deployment situation of the target initial virtual machine to be migrated out with dual NUMA and the target initial virtual machine to be migrated out with single NUMA on two NUMA nodes of the physical machine;
a constraint condition that the target initial virtual machine to be migrated out is migrated in and out of the two NUMA nodes of the physical machine at the same time; and
an anti-affinity constraint condition of the target initial virtual machine to be migrated out in at least one of a physical machine range, a rack range and a switch range.

In one or more embodiments of the present disclosure, the scheduling unit 303, when performing virtual machine scheduling according to the first deployment plan and the second deployment plan, is configured to:
determine, according to the first deployment plan and the second deployment plan, a migration task of the initial virtual machine to be migrated out, where the migration task satisfies the following conditions: a real-time remaining amount of resources of a target physical machine to be migrated to when each initial virtual machine to be migrated out is migrated satisfies a usage amount of resources of the initial virtual machine to be migrated out, and an anti-affinity constraint condition is satisfied between the initial virtual machine to be migrated out and a virtual machine currently deployed on the target physical machine; and execute the migration task.

The device provided by this embodiment may be used to perform the technical solutions of the above method embodiments, and the implementation principles and technical effects thereof are similar, which will not be repeated here in this embodiment.

In order to implement the above embodiments, an embodiment of the present disclosure further provides an electronic device.

Referring to Fig. 4, Fig. 4 shows a schematic structural diagram of an electronic device 400 suitable for implementing the embodiments of the present disclosure, and the electronic device 400 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle-mounted navigation terminal), etc., and fixed terminals such as a digital TV, a desktop computer, etc. The electronic device shown in Fig. 4 is only an example, and should not impose any limitation on the function and use range of the embodiments of the present disclosure.

As shown in Fig. 4, the electronic device 400 may include a processing apparatus (such as a central processing unit, a graphics processor, etc.) 401, which may perform various appropriate actions and processes according to a program stored in a read-only memory (abbreviated as ROM) 402 or a program loaded from a storage apparatus 408 into a random access memory (abbreviated as RAM) 403. The RAM 403 further stores various programs and data required for operations of the electronic device 400. The processing apparatus 401, the ROM 402 and the RAM 403 are connected to each other through a bus 404. An input/output (I/O) interface 405 is also connected to the bus 404.

Usually, the following apparatuses may be connected to the I/O interface 405: an input apparatus 406 including, for example, a touch screen, a touchpad, a keyboard, a mouse, a camera, a microphone, an accelerometer, a gyroscope, etc.; an output apparatus 407 including, for example, a liquid crystal display (abbreviated as LCD), a speaker, a vibrator, etc.; the storage apparatus 408 including, for example, a magnetic tape, a hard disk, etc.; and a communication apparatus 409. The communication apparatus 409 may allow the electronic device 400 to perform wireless or wired communication with other devices to exchange data. Although Fig. 4 shows the electronic device 400 with various apparatuses, it should be understood that it is not required to implement or have all of the shown apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program codes for performing the method shown in the flowchart. In such an embodiment, the computer program may be downloaded and installed from a network through the communication apparatus 409, or installed from the storage apparatus 408, or installed from the ROM 402. When the computer program is executed by the processing apparatus 401, the above-mentioned functions defined in the method of the embodiments of the present disclosure are executed.

It should be noted that the above computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, and computer-readable program codes are carried therein. This propagated data signal may adopt multiple forms, including but not limited to an electromagnetic signal, an optical signal, or any suitable combination thereof. The computer-readable signal medium may also be any computer-readable medium other than the computer-readable storage medium, and the computer-readable signal medium may send, propagate or transmit a program used by or in combination with an instruction execution system, apparatus or device. The program codes contained on the computer-readable medium may be transmitted by any suitable medium, including but not limited to: a wire, an optical cable, an RF (radio frequency), etc., or any suitable combination thereof.

The above computer-readable medium may be contained in the above electronic device, or may exist alone without being assembled into the electronic device.

The above computer-readable medium carries one or more programs, and when the one or more programs are executed by the electronic device, the electronic device is caused to execute the method shown in the above embodiments.

The computer program codes for executing the operations of the present disclosure may be written in one or more programming languages or combination thereof, where the programming languages include object-oriented programming languages such as Java, Smalltalk, C++, and also include conventional procedural programming languages such as "C" language or similar programming languages. The program codes may be completely executed on a computer of a user, partially executed on a computer of a user, executed as an independent software package, partially executed on a computer of a user and partially executed on a remote computer, or completely executed on a remote computer or server. In the case of involving the remote computer, the remote computer may be connected to the computer of the user through any kind of network, including a local area network (abbreviated as LAN) or a wide area network (abbreviated as WAN), or may be connected to an external computer (for example, connected through the Internet with the aid of an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances, and for example, the first obtaining unit may also be described as "a unit for obtaining at least two internet protocol addresses".

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In a first aspect, according to one or more embodiments of the present disclosure, a virtual machine orchestration scheduling method is provided, including:

in response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, where the first deployment plan includes a predicted deployment number of each type of initial virtual machine in each physical machine without considering a virtual machine anti-affinity constraint;

determining, according to an initial deployment situation of each type of initial virtual machine in each physical machine and the first deployment plan, an initial virtual machine to be migrated out in each type of initial virtual machine in each physical machine;

determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered; and

performing virtual machine scheduling according to the first deployment plan and the second deployment plan.

According to one or more embodiments of the present disclosure, the creating the first virtual machine planning model for a virtual machine scheduling process includes:

constructing a first model optimization objective and a first model constraint condition by using a first decision variable to be solved, where the first decision variable includes the predicted deployment number of each type of initial virtual machine in each physical machine, a predicted creation number of to-be-created virtual machines of a target type, and a predicted occupancy state of each physical machine; the first model optimization objective is the total scheduling cost, and the total scheduling cost is a weighted sum of a migration cost of the initial virtual machines to be migrated out, a cost of resource fragmentation generated after remaining resources of each physical machine are used to create the to-be-created virtual machines of the target type, and a physical machine occupancy cost; and the first model constraint condition is a constraint condition related to the first decision variable without considering the virtual machine anti-affinity constraint; and

accordingly, the determining the first deployment plan that minimizes the total scheduling cost according to the first virtual machine planning model includes:

determining that, in response to the first model constraint condition being met, a first decision variable that minimizes the first model optimization objective is used as the first deployment plan.

According to one or more embodiments of the present disclosure, each physical machine includes two non-uniform memory access NUMA nodes; and the first decision variable further includes a predicted deployment number of each type of initial virtual machine in each NUMA node of each physical machine.

According to one or more embodiments of the present disclosure, the first model constraint condition includes one or more of the following:

a constraint condition on a deployment situation of an initial virtual machine with dual NUMA and an initial virtual machine with single NUMA on two NUMA nodes of the physical machine;

a constraint condition that the initial virtual machine to be migrated out is migrated in and out of the two NUMA nodes of the physical machine at the same time;

a constraint condition that a number of each type of initial virtual machine is unchanged before and after scheduling;

a constraint condition on occupied resources of each type of initial virtual machine in each physical machine;

a constraint condition on a relationship between the predicted deployment number of each type of initial virtual machine in each physical machine and the predicted occupancy state of each physical machine;

a constraint condition on a relationship between the predicted creation number of to-be-created virtual machines of the target type additionally created in each physical machine and the remaining resources of each physical machine;

a constraint condition on an upper limit of a total number of migrations in the scheduling process; and

a constraint condition that a specific initial virtual machine is not allowed to be migrated.

According to one or more embodiments of the present disclosure, the determining, according to the initial deployment situation of each type of initial virtual machine in each physical machine and the first deployment plan, the initial virtual machine to be migrated out in each type of initial virtual machine in each physical machine includes:

determining, according to the initial deployment situation of each type of initial virtual machine in each physical machine and the first deployment plan, a target number of each type of initial virtual machine to be migrated out in each physical machine; and

determining, according to the target number of each type of initial virtual machine to be migrated out in each physical machine, the initial virtual machine to be migrated out from each type of initial virtual machine in each physical machine.

According to one or more embodiments of the present disclosure, the determining, according to the target number of each type of initial virtual machine to be migrated out in each physical machine, the initial virtual machine to be migrated out from each type of initial virtual machine in each physical machine includes:

preferentially selecting, from each type of initial virtual machine in each physical machine, an initial virtual machine without an anti-affinity constraint, and in response to a number of the initial virtual machines without the anti-affinity constraint in each type of initial virtual machine in each physical machine being less than the corresponding target number, then selecting initial virtual machines with the anti-affinity constraint.

According to one or more embodiments of the present disclosure, the creating the second virtual machine planning model for the target initial virtual machine to be migrated out includes:

constructing a second model optimization objective and a second model constraint condition by using a second decision variable to be solved, where the second decision variable includes the target physical machine to which each target initial virtual machine to be migrated out is to be deployed; the second model optimization objective is the scheduling cost of the target initial virtual machines to be migrated out; and the second model constraint condition is a constraint condition related to the second decision variable on the premise that the virtual machine anti-affinity constraint is considered; and

accordingly, the determining the second deployment plan that minimizes the scheduling cost of the target initial virtual machine to be migrated out according to the second virtual machine planning model includes:

determining that, in response to the second model constraint condition being met, a second decision variable that minimizes the second model optimization objective is used as the second deployment plan.

According to one or more embodiments of the present disclosure, each physical machine includes two NUMA nodes; and the second decision variable further includes a target NUMA node to which each target initial virtual machine to be migrated out is to be deployed.

According to one or more embodiments of the present disclosure, the second model constraint condition includes one or more of the following:

a constraint condition that each target initial virtual machine to be migrated out only is deployed on one target physical machine;

a constraint condition, which is preconfigured, on whether each target initial virtual machine to be migrated out is allowed to be migrated;

a constraint condition on occupied resources of each target initial virtual machine to be migrated out;

a constraint condition on a deployment situation of the target initial virtual machine to be migrated out with dual NUMA and the target initial virtual machine to be migrated out with single NUMA on two NUMA nodes of the physical machine;

a constraint condition that the target initial virtual machine to be migrated out is migrated in and out of the two NUMA nodes of the physical machine at the same time; and

an anti-affinity constraint condition of the target initial virtual machine to be migrated out in at least one of a physical machine range, a rack range and a switch range.

According to one or more embodiments of the present disclosure, the performing virtual machine scheduling according to the first deployment plan and the second deployment plan includes:

determining, according to the first deployment plan and the second deployment plan, a migration task of the initial virtual machine to be migrated out, where the migration task satisfies the following conditions: a real-time remaining amount of resources of a target physical machine to be migrated to when each initial virtual machine to be migrated out is migrated satisfies a usage amount of resources of the initial virtual machine to be migrated out, and an anti-affinity constraint condition is satisfied between the initial virtual machine to be migrated out and a virtual machine currently deployed on the target physical machine; and executing the migration task.

In a second aspect, according to one or more embodiments of the present disclosure, a virtual machine orchestration scheduling device is provided, including:

a first orchestration unit, configured to: in response to a virtual machine secondary scheduling request, create a first virtual machine planning model according to a deployment attribute feature of an initial virtual machine deployed on a physical machine, and determine a first deployment plan that minimizes a total scheduling cost according to the first virtual machine planning model, where the first deployment plan includes a predicted deployment number of each type of initial virtual machine in each physical machine without considering a virtual machine anti-affinity constraint; and determine, according to an initial deployment situation of each type of initial virtual machine in each physical machine and the first deployment plan, an initial virtual machine to be migrated out in each type of initial virtual machine in each physical machine;

a second orchestration unit, configured to: determine a target initial virtual machine to be migrated out with an anti-affinity constraint in the initial virtual machine to be migrated out, create a second virtual machine planning model for a scheduling process of the target initial virtual machine to be migrated out, and determine a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered; and

a scheduling unit, configured to perform virtual machine scheduling according to the first deployment plan and the second deployment plan.

According to one or more embodiments of the present disclosure, the first orchestration unit, when creating the first virtual machine planning model for the virtual machine scheduling process, is configured to:

construct a first model optimization objective and a first model constraint condition by using a first decision variable to be solved, where the first decision variable includes the predicted deployment number of each type of initial virtual machine in each physical machine, a predicted creation number of to-be-created virtual machines of a target type, and a predicted occupancy state of each physical machine; the first model optimization objective is the total scheduling cost, and the total scheduling cost is a weighted sum of a migration cost of the initial virtual machines to be migrated out, a cost of resource fragmentation generated after remaining resources of each physical machine are used to create the to-be-created virtual machines of the target type, and a physical machine occupancy cost; and the first model constraint condition is a constraint condition related to the first decision variable without considering the virtual machine anti-affinity constraint; and

accordingly, the first orchestration unit, when determining the first deployment plan that minimizes the total scheduling cost according to the first virtual machine planning model, is configured to:

determine that, in response to the first model constraint condition being met, a first decision variable that minimizes the first model optimization objective is used as the first deployment plan.

According to one or more embodiments of the present disclosure, each physical machine includes two non-uniform memory access NUMA nodes; and the first decision variable further includes a predicted deployment number of each type of initial virtual machine in each NUMA node of each physical machine.

According to one or more embodiments of the present disclosure, the first model constraint condition includes one or more of the following:

a constraint condition on a deployment situation of an initial virtual machine with dual NUMA and an initial virtual machine with single NUMA on two NUMA nodes of the physical machine;

a constraint condition that the initial virtual machine to be migrated out is migrated in and out of the two NUMA nodes of the physical machine at the same time;

a constraint condition that a number of each type of initial virtual machine is unchanged before and after scheduling;

a constraint condition on occupied resources of each type of initial virtual machine in each physical machine;

a constraint condition on a relationship between the predicted deployment number of each type of initial virtual machine in each physical machine and the predicted occupancy state of each physical machine;

a constraint condition on a relationship between the predicted creation number of to-be-created virtual machines of the target type additionally created in each physical machine and the remaining resources of each physical machine;

a constraint condition on an upper limit of a total number of migrations in the scheduling process; and

a constraint condition that a specific initial virtual machine is not allowed to be migrated.

According to one or more embodiments of the present disclosure, the first orchestration unit, when determining, according to the initial deployment situation of each type of initial virtual machine in each physical machine and the first deployment plan, the initial virtual machine to be migrated out in each type of initial virtual machine in each physical machine, is configured to:

determine, according to the initial deployment situation of each type of initial virtual machine in each physical machine and the first deployment plan, a target number of each type of initial virtual machine to be migrated out in each physical machine; and
determine, according to the target number of each type of initial virtual machine to be migrated out in each physical machine, the initial virtual machine to be migrated out from each type of initial virtual machine in each physical machine.

According to one or more embodiments of the present disclosure, the second orchestration unit, when determining, according to the target number of each type of initial virtual machine to be migrated out in each physical machine, the initial virtual machine to be migrated out from each type of initial virtual machine in each physical machine, is configured to:

preferentially select, from each type of initial virtual machine in each physical machine, an initial virtual machine without an anti-affinity constraint, and in response to a number of the initial virtual machines without the anti-affinity constraint in each type of initial virtual machine in each physical machine being less than the corresponding target number, then select initial virtual machines with the anti-affinity constraint.

According to one or more embodiments of the present disclosure, the second orchestration unit, when creating the second virtual machine planning model for the target initial virtual machine to be migrated out, is configured to:

construct a second model optimization objective and a second model constraint condition by using a second decision variable to be solved, where the second decision variable includes the target physical machine to which each target initial virtual machine to be migrated out is to be deployed; the second model optimization objective is the scheduling cost of the target initial virtual machines to be migrated out; and the second model constraint condition is a constraint condition related to the second decision variable on the premise that the virtual machine anti-affinity constraint is considered; and

accordingly, the second orchestration unit, when determining the second deployment plan that minimizes the scheduling cost of the target initial virtual machine to be migrated out according to the second virtual machine planning model, is configured to:

determine that, in response to the second model constraint condition being met, a second decision variable that minimizes the second model optimization objective is used as the second deployment plan.

According to one or more embodiments of the present disclosure, each physical machine includes two NUMA nodes; and the second decision variable further includes a target NUMA node to which each target initial virtual machine to be migrated out is to be deployed.

According to one or more embodiments of the present disclosure, the second model constraint condition includes one or more of the following:

a constraint condition that each target initial virtual machine to be migrated out only is deployed on one target physical machine;

a constraint condition, which is preconfigured, on whether each target initial virtual machine to be migrated out is allowed to be migrated;

a constraint condition on occupied resources of each target initial virtual machine to be migrated out;

a constraint condition on a deployment situation of the target initial virtual machine to be migrated out with dual NUMA and the target initial virtual machine to be migrated out with single NUMA on two NUMA nodes of the physical machine;

a constraint condition that the target initial virtual machine to be migrated out is migrated in and out of the two NUMA nodes of the physical machine at the same time; and

an anti-affinity constraint condition of the target initial virtual machine to be migrated out in at least one of a physical machine range, a rack range and a switch range.

According to one or more embodiments of the present disclosure, the scheduling unit, when performing virtual machine scheduling according to the first deployment plan and the second deployment plan, is configured to:

determine, according to the first deployment plan and the second deployment plan, a migration task of the initial virtual machine to be migrated out, where the migration task satisfies the following conditions: a real-time remaining amount of resources of a target physical machine to be migrated to when each initial virtual machine to be migrated out is migrated satisfies a usage amount of resources of the initial virtual machine to be migrated out, and an anti-affinity constraint condition is satisfied between the initial virtual machine to be migrated out and a virtual machine currently deployed on the target physical machine; and execute the migration task.

In a third aspect, according to one or more embodiments of the present disclosure, an electronic device is provided, including: at least one processor and a memory;

the memory stores computer-executable instructions ;

the at least one processor executes the computer-executable instructions stored in the memory to enable the at least one processor to execute the virtual machine orchestration scheduling method according to the first aspect and various possible designs of the first aspect above.

In a fourth aspect, according to one or more embodiments of the present disclosure, a computer-readable storage medium is provided, where the computer-readable storage medium has computer-executable instructions stored thereon, and when a processor executes the computer-executable instructions , the virtual machine orchestration scheduling method according to the first aspect and various possible designs of the first aspect above is implemented.

In a fifth aspect, according to one or more embodiments of the present disclosure, a computer program product is provided, including a computer program, where when the computer program is executed by a processor, the virtual machine orchestration scheduling method according to the first aspect and various possible designs of the first aspect above is implemented.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by the arbitrary combination of the above technical features or their equivalent features without departing from the above disclosed concept. For example, a technical solution formed by the above features and the technical features disclosed in the present disclosure (but not limited to) with similar functions replacing each other.

In addition, although the operations are depicted in a particular order, this should not be understood as requiring the operations to be performed in the particular order shown or in a sequential order. Under certain circumstances, multitasking and parallel processing may be advantageous. Likewise, although several specific implementation details are included in the above discussion, these should not be construed as limiting the scope of the present disclosure. Certain features described in the context of separate embodiments may also be implemented in a single embodiment in combination. On the contrary, various features described in the context of a single embodiment may also be implemented in multiple embodiments individually or in any suitable sub-combination.

Although the subject matter has been described in a language specific to structural features and/or method logical actions, it should be understood that the subject matter defined in the appended claims is not necessarily limited to the specific features or actions described above. On the contrary, the specific features and actions described above are only exemplary forms for implementing the claims.

## Claims

1. A virtual machine orchestration scheduling method, comprising:

   in response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, wherein the first deployment plan comprises a predicted deployment number of each type of initial virtual machine in each physical machine without considering a virtual machine anti-affinity constraint;
   determining, according to an initial deployment situation of each type of initial virtual machine in each physical machine and the first deployment plan, an initial virtual machine to be migrated out in each type of initial virtual machine in each physical machine;
   determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, wherein the second deployment plan comprises a target physical machine to which each target initial virtual machine to be migrated out is to be deployed on the premise that the virtual machine anti-affinity constraint is considered; and
   performing virtual machine scheduling according to the first deployment plan and the second deployment plan.

2. The method of claim 1, wherein the creating the first virtual machine planning model for a virtual machine scheduling process comprises:

   constructing a first model optimization objective and a first model constraint condition by using a first decision variable to be solved, wherein the first decision variable comprises the predicted deployment number of each type of initial virtual machine in each physical machine, a predicted creation number of to-be-created virtual machines of a target type, and a predicted occupancy state of each physical machine; the first model optimization objective is the total scheduling cost, and the total scheduling cost is a weighted sum of a migration cost of the initial virtual machine to be migrated out, a cost of resource fragmentation generated after remaining resources of each physical machine are used to create the to-be-created virtual machines of the target type, and a physical machine occupancy cost; and the first model constraint condition is a constraint condition related to the first decision variable without considering the virtual machine anti-affinity constraint; and

the determining the first deployment plan that minimizes the total scheduling cost according to the first virtual machine planning model comprises:

determining that, in response to the first model constraint condition being met, a first decision variable that minimizes the first model optimization objective is used as the first deployment plan.

3. The method of claim 2, wherein each physical machine comprises two non-uniform memory access NUMA nodes; and the first decision variable further comprises a predicted deployment number of each type of initial virtual machine in each NUMA node of each physical machine.

4. The method of claim 3, wherein the first model constraint condition comprises one or more of the following:

a constraint condition on a deployment situation of an initial virtual machine with dual NUMA and an initial virtual machine with single NUMA on two NUMA nodes of the physical machine;

a constraint condition that the initial virtual machine to be migrated out is migrated in and out of the two NUMA nodes of the physical machine at the same time;

a constraint condition that a number of each type of initial virtual machine is unchanged before and after scheduling;

a constraint condition on occupied resources of each type of initial virtual machine in each physical machine;

a constraint condition on a relationship between the predicted deployment number of each type of initial virtual machine in each physical machine and the predicted occupancy state of each physical machine;

a constraint condition on a relationship between a predicted creation number of to-be-created virtual machines of the target type additionally created in each physical machine and the remaining resources of each physical machine;

a constraint condition on an upper limit of a total number of migrations in the scheduling process; and

a constraint condition that a specific initial virtual machine is not allowed to be migrated.

5. The method of any one of claims 1 to 4, wherein the determining, according to the initial deployment situation of each type of initial virtual machine in each physical machine and the first deployment plan, the initial virtual machine to be migrated out in each type of initial virtual machine in each physical machine comprises:

determining, according to the initial deployment situation of each type of initial virtual machine in each physical machine and the first deployment plan, a target number of each type of initial virtual machine to be migrated out in each physical machine; and

determining, according to the target number of each type of initial virtual machine to be migrated out in each physical machine, the initial virtual machine to be migrated out from each type of initial virtual machine in each physical machine.

6. The method of claim 5, wherein the determining, according to the target number of each type of initial virtual machine to be migrated out in each physical machine, the initial virtual machine to be migrated out from each type of initial virtual machine in each physical machine comprises:

preferentially selecting, from each type of initial virtual machine in each physical machine, an initial virtual machine without an anti-affinity constraint, and in response to a number of the initial virtual machines without the anti-affinity constraint in each type of initial virtual machine in each physical machine being less than a corresponding target number, then selecting an initial virtual machine with the anti-affinity constraint.

7. The method of claim 1, wherein the creating the second virtual machine planning model for the target initial virtual machine to be migrated out comprises:

constructing a second model optimization objective and a second model constraint condition by using a second decision variable to be solved, wherein the second decision variable comprises the target physical machine to which each target initial virtual machine to be migrated out is to be deployed; the second model optimization objective is the scheduling cost of the target initial virtual machine to be migrated out; and the second model constraint condition is a constraint condition related to the second decision variable on the premise that the virtual machine anti-affinity constraint is considered; and

the determining the second deployment plan that minimizes the scheduling cost of the target initial virtual machine to be migrated out according to the second virtual machine planning model comprises:

determining that, in response to the second model constraint condition being met, a second decision variable that minimizes the second model optimization objective is used as the second deployment plan.

8. The method of claim 7, wherein each physical machine comprises two NUMA nodes; and the second decision variable further comprises a target NUMA node to which each target initial virtual machine to be migrated out is to be deployed.

9. The method of claim 8, wherein the second model constraint condition comprises one or more of the following:

a constraint condition that each target initial virtual machine to be migrated out only is deployed on one target physical machine;

a constraint condition, which is preconfigured, on whether each target initial virtual machine to be migrated out is allowed to be migrated;

a constraint condition on occupied resources of each target initial virtual machine to be migrated out;

a constraint condition on a deployment situation of the target initial virtual machine to be migrated out with dual NUMA and the target initial virtual machine to be migrated out with single NUMA on two NUMA nodes of the physical machine;

a constraint condition that the target initial virtual machine to be migrated out is migrated in and out of the two NUMA nodes of the physical machine at the same time; and

an anti-affinity constraint condition of the target initial virtual machine to be migrated out in at least one of a physical machine range, a rack range and a switch range.

10. The method of claim 1, wherein the performing virtual machine scheduling according to the first deployment plan and the second deployment plan comprises:

determining, according to the first deployment plan and the second deployment plan, a migration task of the initial virtual machine to be migrated out, wherein the migration task satisfies the following conditions: a real-time remaining amount of resources of a target physical machine to be migrated to when each initial virtual machine to be migrated out is migrated satisfies a usage amount of resources of the initial virtual machine to be migrated out, and an anti-affinity constraint condition is satisfied between the initial virtual machine to be migrated out and a virtual machine currently deployed on the target physical machine; and executing the migration task.

11. A virtual machine orchestration scheduling device, comprising:

a first orchestration unit, configured to: in response to a virtual machine secondary scheduling request, create a first virtual machine planning model according to a deployment attribute feature of an initial virtual machine deployed on a physical machine, and determine a first deployment plan that minimizes a total scheduling cost according to the first virtual machine planning model, wherein the first deployment plan comprises a predicted deployment number of each type of initial virtual machine in each physical machine without considering a virtual machine anti-affinity constraint; and determine, according to an initial deployment situation of each type of initial virtual machine in each physical machine and the first deployment plan, an initial virtual machine to be migrated out in each type of initial virtual machine in each physical machine;

a second orchestration unit, configured to determine a target initial virtual machine to be migrated out with an anti-affinity constraint in the initial virtual machine to be migrated out, create a second virtual machine planning model for the target initial virtual machine to be migrated out, and determine a second deployment plan that minimizes a scheduling cost of the target initial virtual machine to be migrated out according to the second virtual machine planning model, wherein the second deployment plan comprises a target physical machine to which each target initial virtual machine to be migrated out is to be deployed on the premise that the virtual machine anti-affinity constraint is considered; and

a scheduling unit, configured to perform virtual machine scheduling according to the first deployment plan and the second deployment plan.

12. An electronic device, comprising: a processor and a memory;

wherein the memory stores computer-executable instructions;
the processor executes the computer-executable instructions stored in the memory to enable the processor to execute the method of any of claims 1 to 10.

13. A non-transitory computer-readable storage medium, wherein the non-transitory computer-readable storage medium has computer-executable instructions stored thereon, and when a processor executes the computer-executable instructions, the method of any of claims 1 to 10 is implemented.

14. A computer program product, comprising a computer program, wherein when the computer program is executed by a processor, the method of any of claims 1 to 10 is implemented.

Virtual machine orchestration scheduling method

| First stage | | Second stage | | Third stage |
|---|---|---|---|---|
| Classifying virtual machines; creating a first virtual machine planning model without considering a virtual machine anti-affinity constraint, and determining a predicted deployment number of each type of initial virtual machine in each physical machine; determining an initial virtual machine to be migrated out in each type of initial virtual machine in each physical machine | | Creating a second virtual machine planning model for a target initial virtual machine to be migrated out with an anti-affinity constraint in the initial virtual machine to be migrated out, and determining a target physical machine to which each target initial virtual machine to be migrated out is to be deployed; updating the first deployment plan according to the second deployment plan | | Scheduling virtual machine; orchestrating and executing the migration tasks of all initial virtual machine to be migrated out according to the first deployment plan and the second deployment plan |

Fig. 1

In response to a virtual machine secondary scheduling request, creating a first virtual machine planning model according to a deployment attribute feature of an initial virtual machine deployed on a physical machine, and determining a first deployment plan that minimizes a total scheduling cost according to the first virtual machine planning model, where the first deployment plan includes a predicted deployment number of each type of initial virtual machine in each physical machine without considering a virtual machine anti-affinity constraint

S201

Determining, according to an initial deployment situation of each type of initial virtual machine in each physical machine and the first deployment plan, an initial virtual machine to be migrated out in each type of initial virtual machine in each physical machine

S202

Determining a target initial virtual machine to be migrated out with an anti-affinity constraint in the initial virtual machine to be migrated out, creating a second virtual machine planning model for the target initial virtual machine to be migrated out, and determining a second deployment plan that minimizes a scheduling cost of the target initial virtual machine to be migrated out according to the second virtual machine planning model, where the second deployment plan includes a target physical machine to which each target initial virtual machine to be migrated out is to be deployed on the premise that the virtual machine anti-affinity constraint is considered

S203

Performing virtual machine scheduling according to the first deployment plan and the second deployment plan

S204

Fig. 2

Virtual Machine Orchestration Scheduling Device 300

301

First
Orchestration
Unit

302

Second
Orchestration
Unit

303

Scheduling
Unit

Fig. 3

Electronic Device
400

401

Processing
Apparatus

402

ROM

403

RAM

404

405

I/O Interface

406

Input
Apparatus

407

Output
Apparatus

408

Storage
Apparatus

409

Communication
Apparatus

Fig. 4

## EUROPEAN SEARCH REPORT

**Application Number**

EP 25 19 3216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAMAS, LOPEZ-PIRES, BARAN: "Two-phase virtual machine placement algorithms for cloud computing: An experimental evaluation under uncertainty", 2017 XLIII LATIN AMERICAN COMPUTER CONFERENCE (CLEI), IEEE, 4 September 2017 (2017-09-04), pages 1-10, XP033286312, [retrieved on 2017-12-18] * abstract * * Sections 2, 2.3 and 2.4 * | 1-14 | INV. G06F9/48 G06F9/455 G06F9/50 |
| A | US 2022/156104 A1 (AT&T INTELLECTUAL PROPERTY I, L.P.) 19 May 2022 (2022-05-19) * the whole document * | 1-14 | |
| A | JIA RAO ET AL: "Optimizing virtual machine scheduling in NUMA multicore systems", HIGH PERFORMANCE COMPUTER ARCHITECTURE (HPCA2013), 23 February 2013 (2013-02-23), pages 306-317, XP032415829, * the whole document * | 1-14 | |
| A | CHEN ZUZHI ET AL: "Resource Allocation with Service Affinity in Large-Scale Cloud Environments", 2024 IEEE 40TH INTERNATIONAL CONFERENCE ON DATA ENGINEERING (ICDE), IEEE, 13 May 2024 (2024-05-13), pages 5280-5293, XP034647657, [retrieved on 2024-07-23] * the whole document * | 1-14 | TECHNICAL FIELDS SEARCHED (IPC)<br><br>G06F |
| A | US 2018/046481 A1 (VMWARE, INC.) 15 February 2018 (2018-02-15) * the whole document * | 1-14 | |

The present search report has been drawn up for all claims

| Place of search | Date of completion of the search | Examiner |
|---|---|---|
| The Hague | 16 December 2025 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 19 3216

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2025

| Patent document cited in search report | Publication date | Patent family member(s) | Publication date |
|---|---|---|---|
| US 2022156104 A1 | 19-05-2022 | US 2020034173 A1<br>US 2020192697 A1<br>US 2022156104 A1 | 30-01-2020<br>18-06-2020<br>19-05-2022 |
| US 2018046481 A1 | 15-02-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411911576